# EUROPEAN PATENT APPLICATION

(11) **EP 4 749 249 A1**
(43) Date of publication of application: **27.05.2026**
(21) Application number: 24843351.8
(22) Date of filing: 27.06.2024
(51) Int. Cl.: G01F 15/14, G01F 15/063, G08C 17/02

(54) **WATER METER READING DEVICE**

(30) Priority: 18.07.2023 KR 20230093414
(71) Applicant: LG INNOTEK CO. LTD, Gangseo-gu Seoul 07796 (KR)
(72) Inventor: LEE, Kap Soul, Seoul 07796 (KR); JEONG, Ki Hyun, Seoul 07796 (KR)
(74) Representative: M. Zardi & Co S.A.
(86) International application number: PCT/KR2024/008963
(87) International publication number: WO 2025/018631

(57) **Abstract**

A water meter reading device disclosed in an embodiment of the present invention includes a case having an accommodation space therein, wherein one side surface of the accommodation space is blocked and the other side is open; a cover coupled to the other side bottom of the case; an antenna board disposed in the accommodation space and facing one side surface of the case; a main battery disposed in the accommodation space and facing the other side of the antenna board; a holder disposed in the accommodation space, supporting the main battery, and coupled to the case; a capacitor disposed between the main battery and the holder; and a main board disposed between the holder and the cover and electrically connected to the antenna board and the battery, wherein the main battery may be disposed closer to one side of the case than to the other side of the case.

## Description

### [Technical Field]

The present invention relates to a water meter reading device.

The present invention relates to a wireless reading device for a water meter.

### [Background Art]

In general households or buildings, water, gas, electricity, etc. are supplied, and in order to measure the amount of usage for charging fees, water meters, gas meters, electric meters, etc. are installed. In particular, in the case of water meters, since they are buried at a certain depth in buildings to prevent damage such as freezing, reading is inconvenient. Therefore, in order to facilitate reading, a water meter reading device is installed on the upper part of the water meter, and a meter reader can easily read by photographing from the outside through a display such as a PDA connected thereto.

However, when the camera and the reading part of the water meter are close, there is a problem in that the usage numbers are not photographed or are difficult to identify even if photographed. In addition, in a dark environment, the above technology cannot be used, or it is necessary to use a separate light source.

In addition, when a water meter reading device uses an external antenna for wireless communication, the external antenna protrudes, so there is a high risk of damage and a problem may occur in that radiation characteristics are not uniform when deformed. In addition, the size of the water meter reading device increases due to the external antenna, and installation space restrictions may occur. In addition, a process of separately assembling the water meter reading device and the external antenna is required, and problems such as assembly defects may occur during assembly.

In addition, since water meters are located underground, waterproof performance is required due to various environmental factors, and most water meters solve waterproofing by a molding method. However, when a water meter is manufactured through molding, there is a problem that the weight of the water meter increases and reuse of the meter is impossible.

### [Detailed Description of the Invention]

### [Technical Problems]

An embodiment of the present invention provides a water meter reading device having a new built-in antenna capable of solving the above problems.

An embodiment of the present invention provides a water meter reading device including an antenna board having a planar conductive pattern inside a case having a battery and a main board therein.

An embodiment of the present invention provides a water meter reading device that performs wireless communication through a case having a battery, a main board, and a communication antenna board therein.

An embodiment of the present invention provides a reusable water meter reading device having excellent waterproof performance without internal molding processing.

### [Technical Solutions]

A water meter reading device according to an embodiment of the present invention comprises: a case having an accommodation space therein, wherein one side surface of the accommodation space is blocked and the other side is open; a cover coupled to the other side of the case; an antenna board disposed in the accommodation space and facing the one side surface of the case; a main battery disposed in the accommodation space and facing the other side of the antenna board; a holder disposed in the accommodation space, supporting the main battery, and coupled to the case; a capacitor disposed between the main battery and the holder; and a main board disposed between the holder and the cover and electrically connected to the antenna board and the battery, wherein the main battery may be disposed closer to the one side surface of the case than to the other side of the case.

According to one embodiment of the present invention, the case comprises: a first case portion extending in a cylindrical shape from one side surface of the case toward the other side; a connecting portion having a diameter larger than a diameter of the first case portion, disposed between an opposite end of the first case portion and the other side of the case; and a second case portion extending from an opposite end of the connecting portion toward the other side of the case, and the second case portion further comprises a connector portion disposed on an outer side of the second case portion, and a diameter of an end of the connecting portion adjacent to the other side of the case may be larger than a diameter of an end of the connecting portion adjacent to the one side surface of the case.

According to one embodiment of the present invention, the accommodation space comprises: a first accommodation space positioned inside the first case portion; and a second accommodation space positioned inside the connecting portion and the second case portion, and the second accommodation space may become larger from an upper portion toward a lower portion thereof.

According to one embodiment of the present invention, the antenna board and the main battery are disposed in the first accommodation space, at least one of the capacitor, the holder, and the main board is disposed in the second accommodation space, the antenna board is disposed at an uppermost portion of the first accommodation space, the capacitor is disposed between the holder and the main battery, and the main board may be disposed at a lowermost portion of the second accommodation space.

According to one embodiment of the present invention, the connecting portion further comprises: a holder fastening portion protruding from the connecting portion into the second accommodation space and coupled to the holder; and a board fastening portion protruding from the connecting portion into the second accommodation space and coupled to the main board, and a lower end of the board fastening portion may be disposed lower than a lower end of the holder fastening portion.

According to one embodiment of the present invention, the main board comprises:
a board through-hole through which a fastening member passes; an antenna connection portion disposed on one upper side of the main board and electrically connected to the antenna board; a battery connection portion disposed on another upper side of the main board and electrically connected to the main battery; and
a connector connection portion disposed on a lower portion of the main board and electrically connected to the connector portion, and the board through-hole may be provided at a position corresponding to the board fastening portion.

According to one embodiment of the present invention, a first wire electrically connecting the antenna board and the antenna connection portion; and a second wire electrically connecting the main battery and the battery connection portion are included, and a length of the first wire may be longer than a length of the second wire.

According to one embodiment of the present invention, the holder comprises: a base portion formed in a plate shape; a seating portion extending from one side surface of the base portion toward the one side surface of the case and on which the capacitor is seated; a guide piece extending further from the seating portion toward the one side surface of the case and supporting a lower circumference of the main battery; and a spacer disposed on one side surface of the seating portion, contacting a lower portion of the main battery and spacing a lower surface of the main battery apart from a surface of the spacer, and the base portion may further comprise a base through-hole provided at a position corresponding to the holder fastening portion.

According to one embodiment of the present invention, the base portion comprises: a first groove provided at a position vertically corresponding to the board through-hole; and a second groove guiding the first wire and the second wire, and the first groove and the second groove may be provided so as not to overlap with the base through-hole.

According to one embodiment of the present invention, the spacer is provided in plural, a height of the seating portion is lower than a height of the capacitor disposed on the seating portion, and a height of an upper end of the spacer may be higher than a height of an upper end of the capacitor.

According to one embodiment of the present invention, an upper end of the guide piece may have elasticity with respect to a lower end thereof.

According to one embodiment of the present invention, the first case portion comprises: a first wire guide portion having a groove extending vertically from one side of an inner circumferential surface of the first case portion and on which the first wire is seated; and a second wire guide portion having a groove extending vertically from another side of the inner circumferential surface of the first case portion and on which the second wire is seated, and the first wire guide portion may have a length longer than a length of the second wire guide portion.

According to one embodiment of the present invention, the second case portion comprises a protruding portion disposed around a lower circumference of the second case portion and disposed from an inner surface toward an outer surface of the second case portion, and the protruding portion comprises: a first protruding portion adjacent to the inner surface of the second case portion; and a second protruding portion adjacent to the outer surface of the second case portion, and a horizontal length of the second protruding portion may be thicker than a horizontal length of the first protruding portion.

According to one embodiment of the present invention, the cover is provided in a disk shape, and the cover comprises a recessed portion disposed around an outer circumferential edge in a radial direction of the cover and disposed from an inner surface toward an outer surface, and the recessed portion comprises: a first recessed portion disposed corresponding to the first protruding portion; and a second recessed portion disposed corresponding to the second protruding portion, and a horizontal length of the second recessed portion may be thicker than a horizontal length of the first recessed portion.

According to one embodiment of the present invention, a lower surface of the first recessed portion and a surface of the cover contacting the lower surface of the first recessed portion, and a lower surface of the second recessed portion and a surface of the cover contacting the lower surface of the second recessed portion may be joined.

### [Effects of the Invention]

According to the water meter reading device of an embodiment of the present invention, by including a compact built-in antenna, a risk of damage to an antenna can be eliminated, and deterioration of antenna characteristics due to damage can be prevented.

According to the water meter reading device of an embodiment of the present invention, a size of the reading device can be reduced, thereby reducing installation space restrictions.

According to the water meter reading device of an embodiment of the present invention, by electrically joining a communication antenna board and a main board inside a case, antenna defects due to assembly can be prevented and communication defects can be eliminated.

According to an embodiment of the present invention, reliability of a wireless water meter reading device can be improved.

According to an embodiment of the present invention, a weight of the water meter reading device is reduced and reassembly may be possible.

According to an embodiment of the present invention, a manufacturing process of the water meter reading device may be facilitated.

### [Brief Description of the Drawings]

FIG. 1 is a block diagram showing a water meter reading device according to an embodiment of the present invention.
FIG. 2 is a perspective view showing a water meter reading device according to an embodiment of the present invention.
FIG. 3 is an exploded view of a water meter reading device according to an embodiment of the present invention.
FIG. 4 is a front cross-sectional view of a water meter reading device according to an embodiment of the present invention.
FIG. 5 is a side cross-sectional view of a water meter reading device according to an embodiment of the present invention.
FIG. 6 is a view showing a structure of a holder of a water meter reading device according to an embodiment of the present invention.
FIG. 7 is a cross-sectional view taken along line 7-7' of FIG. 6(b).
FIG. 8 is an enlarged view of part A of FIG. 4.

### [Mode for Embodiment of the Invention]

Hereinafter, preferred embodiments of the present invention will be described in detail with reference to the accompanying drawings. The technical spirit of the present invention is not limited to the embodiments described, but may be implemented in various different forms, and within the scope of the technical spirit of the present invention, one or more of components of the embodiments may be selectively combined or substituted and used. In addition, terms (including technical and scientific terms) used in embodiments of the present invention, unless clearly and specifically defined, may be interpreted as meanings generally understood by those having ordinary skill in the art to which the present invention belongs, and terms generally used such as dictionary-defined terms may be interpreted considering meanings in the context of the related art. In addition, terms used in embodiments of the present invention are for describing the embodiments and are not intended to limit the present invention. In this specification, a singular form may include a plural form unless specifically stated otherwise in the context, and when described as at least one of A and/or B and/or C, it may include one or more of all combinations that can be combined with A, B, and C. In addition, in describing components of embodiments of the present invention, terms such as first, second, A, B, (a), (b), and the like may be used. These terms are only for distinguishing one component from another component, and the essence, order, or sequence of the corresponding component is not limited by such terms. In addition, when a component is described as being "connected", "coupled", or "connected" to another component, it may include not only a case in which the component is directly connected, coupled, or connected to another component, but also a case in which the component is "connected", "coupled", or "connected" to another component by another component interposed therebetween. In addition, when described as being formed or disposed "above (upper)" or "below (lower)" each component, "above (upper)" or "below (lower)" includes not only a case in which two components are in direct contact with each other, but also a case in which one or more other components are formed or disposed between the two components. In addition, when expressed as above (upper) or below (lower), it may include meanings of not only an upward direction but also a downward direction based on one component.

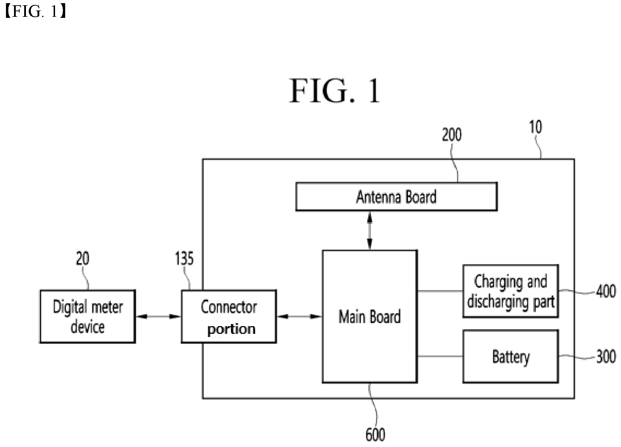

FIG. 1 is a block diagram showing a water meter reading device according to an embodiment of the present invention.

Referring to FIG. 1, a water meter reading device 10 is a wireless reading device, and can transmit reading information received from a digital meter device 20, which is a water meter, remotely in response to a request from a meter reader or a reading device, so that an amount of water usage can be detected at a remote location. In addition, the water meter reading device 10 can transmit and receive reading control information with the digital meter device 20 based on information received according to control of the meter reader or the reading device.

A connector portion 115 of the water meter reading device 10 is connected to the digital meter device 20 by a signal cable. The water meter reading device 10 may include a main board 600 connected to the connector portion 115, a battery 300 as a power supply part, a charging and discharging part 400, and an antenna board 200. The battery 300 may be defined as a main battery 300, and the charging and discharging part 400 may be defined as a capacitor 400.

The main board 600 serves as a control part, and controls the main battery 300 and the capacitor 400 to stably supply power. In addition, the main board 600 is connected to the digital meter device 20 through the connector portion 115, and communicates with the digital meter device 20 to receive reading information such as water usage or to control the digital meter device 20. The main board 600 is electrically connected to the antenna board 200 and controls transmission and reception of wireless communication signals.

The charging and discharging part 400 includes a capacitor, and controls charging and discharging of the battery 300 to supply power required for each component. The antenna board 200 is electrically connected to the main board 600 and performs wireless communication with the outside. When an external reading request is received, the antenna board 200 transmits reading information obtained through the main board 600. The antenna board 200 may be connected through at least one or two or more of Bluetooth communication and low-speed or high-speed wireless Internet. The low-speed Internet includes a LoRa network, and the high-speed Internet may include LTE (Long Term Evolution).

The water meter reading device 10 is installed underground or outdoors, and thus waterproofing is required in order to protect internal circuit performance. That is, when moisture or water penetrates into the interior of the device, various components may be damaged due to a short circuit between internal circuits, or communication failure may occur. When such problems occur, product reliability may be reduced. An embodiment of the present invention blocks the interior and exterior of the water meter reading device 10 from each other to solve waterproofing or leakage problems, thereby preventing circuit short problems or communication failures.

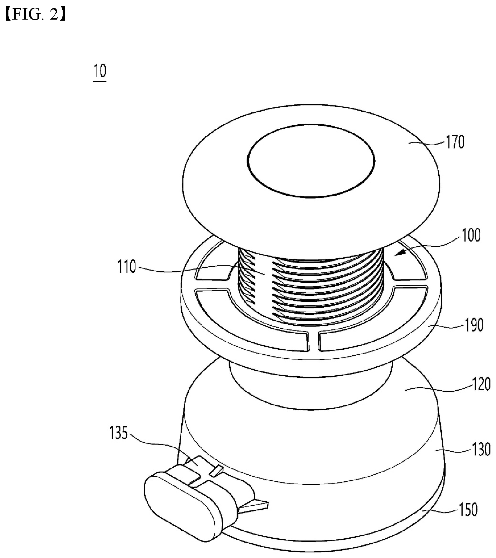

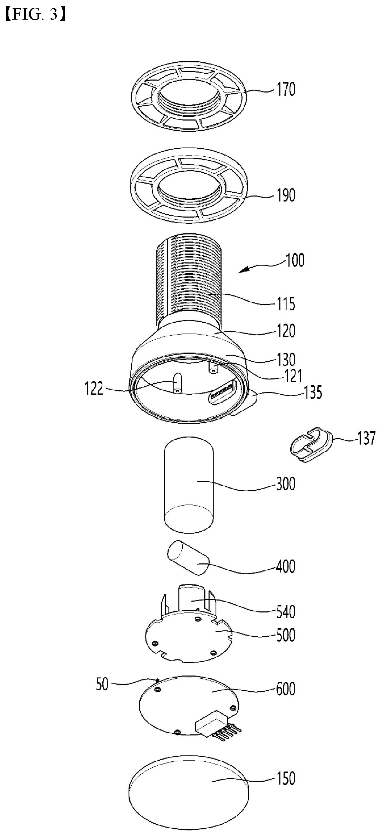

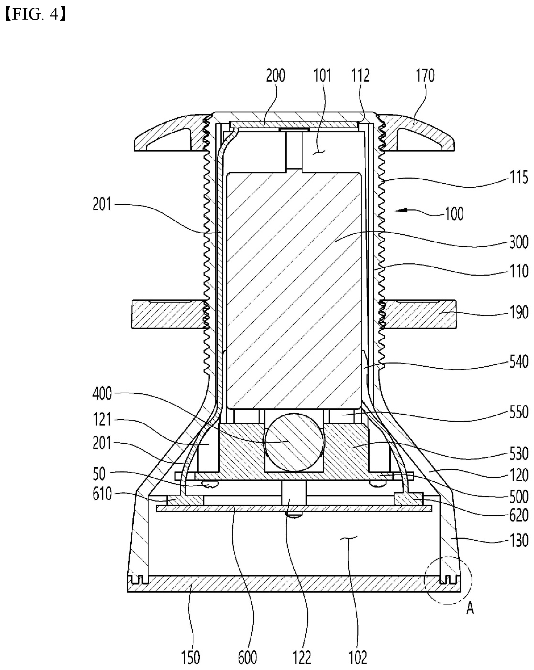

FIG. 2 is a perspective view showing a water meter reading device according to an embodiment of the present invention, FIG. 3 is an exploded view of a water meter reading device according to an embodiment of the present invention, and FIG. 4 is a front cross-sectional view of a water meter reading device according to an embodiment of the present invention.

Referring to FIGS. 2 and 4, the water meter reading device 10 may include a case 100, a cover 150 coupled to a bottom of the case 100, an upper clamp 170 coupled to an outer side of the case 100, a main battery 300 disposed in the case 100 to supply power, a capacitor 400 connected to the main battery and performing a charging and discharging function, a main board 600, and an antenna board 200.

The case 100 may be made of an opaque material, for example, a plastic material. The case 100 may be made of a material through which laser does not transmit and is absorbed.

The case 100 may include a first case portion 110 forming an upper portion of the case, a second case portion 130 forming a lower portion of the case, a connecting portion 120 connecting the first case portion 110 and the second case portion 130, and the cover 150 coupled to the bottom of the case 100.

The case 100 may have accommodation spaces 101 and 102 in which components are accommodated. The accommodation spaces 101 and 102 may include a first accommodation space 101 formed in an upper portion of the case 100 and a second accommodation space 102 formed in a lower portion of the case 100. That is, one side of the case 100 may be blocked and the other side may be open. A size of the second accommodation space 102 may become larger from an upper portion toward a lower portion thereof. The other side of the case 100 may be blocked by the cover 150.

The first case portion 110 may form the upper portion of the case 100. The first case portion 110 may extend in a cylindrical shape from one side surface of the case 100 toward the other side. An upper surface of the first case portion 110 may be blocked. The first accommodation space 101 may be formed by the first case portion 110. The antenna board 200 and the main battery 300 may be accommodated in the first accommodation space 101.

A screw thread 115 to which the upper clamp 170 and a lower clamp 190 can be coupled may be provided on a circumferential surface of the first case portion 110. After fastening the lower clamp 190 through the first case portion 110, the upper clamp 170 is fastened while being spaced apart from the lower clamp 190. In this case, a part of a housing protecting an outer side of the reading device 10 is inserted between the upper clamp 170 and the lower clamp 190, and by rotating the lower clamp 190, the reading device 10 may be fixed and an upper end of the case 100 may be exposed.

A first wire guide portion 117 for guiding a first wire 201 to be described later may be provided on an inner circumferential surface of the first case portion 110. The first wire guide portion 117 may include a groove extending vertically from one side of the inner circumferential surface of the first case portion 110.

A second wire guide portion 118 for guiding a second wire 301 to be described later may be further provided on the inner circumferential surface of the first case portion 110. The second wire guide portion 118 may include a groove extending vertically from another side of the inner circumferential surface of the first case portion 110.

The connecting portion 120 is connected to a lower end of the first case portion 110 and may expand more in a radial direction toward a lower end of the connecting portion 120. That is, a diameter of the connecting portion 120 may be larger toward the other side or a lower surface of the case 100 than a diameter of the first case portion 110. For example, the connecting portion 120 may have a truncated cone shape.

The second accommodation space 102 may be formed by the connecting portion 120 and the second case portion 130 to be described later. The capacitor 400, the holder 500 supporting the capacitor 400, and the main board 600 may be accommodated in the second accommodation space 102.

The connecting portion 120 may include a holder fastening portion 121 to which the holder 500 may be fixed. The holder fastening portion 121 may protrude from the connecting portion 120 into the second accommodation space 102. A fastening member 50 may be coupled to the holder fastening portion 121. The holder fastening portion 121 may be provided in plural. For example, two or more holder fastening portions 121 may be disposed spaced apart from each other.

The connecting portion 120 may further include a main board fastening portion 122 to which the main board 600 is fastened. The main board 600 may protrude into the second accommodation space 102. The main board fastening portion 122 may be provided so as not to overlap with the holder fastening portion 121. A fastening member 50 may be coupled to the main board fastening portion 122. The main board fastening portion 122 may be formed in plural. For example, two or more main board fastening portions 122 may be disposed spaced apart from each other.

The second case portion 130 may form a lower portion of the case 100. The second case portion 130 may extend from a lower end of the connecting portion 120 toward the other side or a lower surface of the case 100. That is, a lower end of the second case portion 130 may be the other side of the case or the lower surface of the case 100. The cover 150 may be coupled to a lower end of the second case portion 130.

The second case portion 130 may gradually increase in an outer diameter or a diameter as it extends toward the other side of case or the lower surface of the case 100. That is, a radius from a central axis of the case may increase from an upper end toward a lower end of the second case portion 130. For example, the second case portion 130 may have a truncated cone shape. An angle of an inclined surface of the second case portion 130 may not be greater than an angle of an inclined surface of the connecting portion 120.

The second case portion 130 may form the second accommodation space 102 together with the connecting portion 120.

A connector portion 135 to which a connector is connected may be provided on one side of the second case portion 130. The connector portion 135 may protrude radially outward from the second case portion 130. The connector portion 135 may be integrally injection-molded with the case 100. A connector pin 135B may protrude from the connector portion 135 toward an inner side of the second case portion 130. The connector pin 135B may be connected to a connector connection portion 630 included in the main board 600 to be described later. A connector cover 137 covering the connector portion 135 may be provided on the connector portion 135.

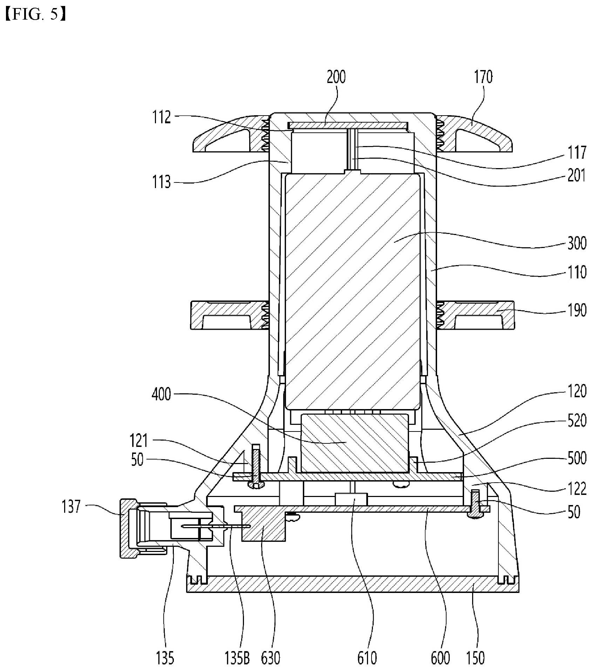

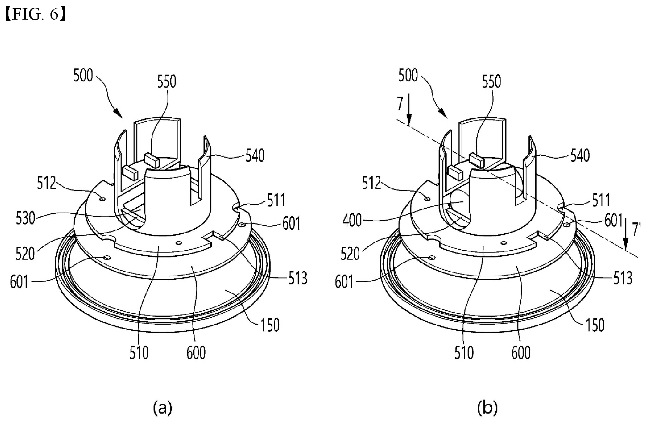

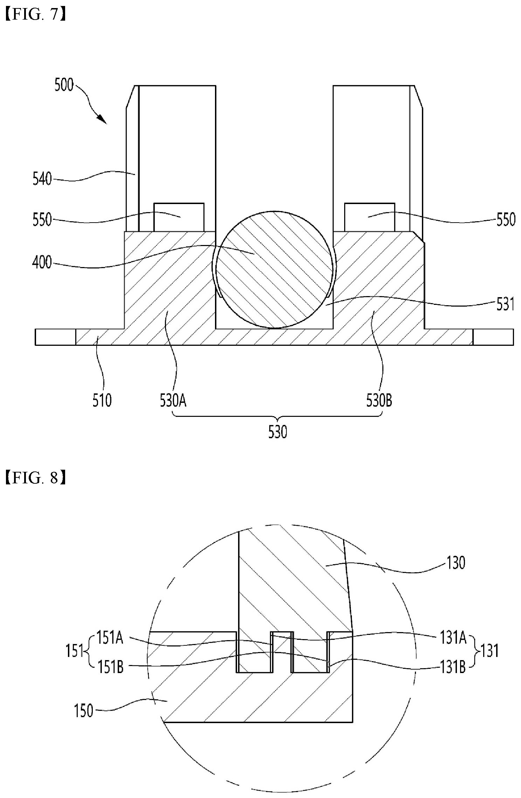

FIG. 5 is a side cross-sectional view of a water meter reading device according to an embodiment of the present invention, FIG. 6 is a view showing the holder, the main board, and the cover of the water meter reading device according to an embodiment of the present invention in detail, and FIG. 7 is a cross-sectional view taken along line 7-7' of FIG. 6(b).

Referring to FIGS. 4 to 7, the water meter reading device 10 according to an embodiment of the present invention is accommodated and fastened in the order of the antenna board 200, the main battery 300, the capacitor 400, the holder 500, and the main board 600 in the case 100, and then the cover 150 is coupled to a lower end of the second case portion 130 to be sealed.

The antenna board 200 may be positioned at an upper end of the first accommodation space 102. The antenna board 200 may be disposed facing one side surface of the case 100. In detail, the antenna board 200 may be disposed adjacent to and facing an upper surface of the first case portion 110. The first case portion 110 may include an antenna board coupling portion 112 for fixing the antenna board 200. The antenna board coupling portion 112 may include a protruding rib protruding from an inner circumferential surface of the first case portion 110. In addition, the antenna board coupling portion 112 may be formed in plural, and may be integrally formed along an inner circumferential surface of the first case portion 110.

The antenna board 200 may be electrically connected to the main board 600. A first wire 201 electrically connecting the antenna board 200 and the main board 600 may be provided. After the first wire 201 is bonded to the antenna board 200, the antenna board 200 may be accommodated in the first accommodation space 102.

The main battery 300 may be accommodated after the antenna board 200 is accommodated in the first accommodation space 102. The main battery 300 may have a cylindrical shape. As another example, the main battery 300 may have a polygonal column shape.

The main battery 300 may be disposed adjacent to another surface of the antenna board 200. A catching portion 113 provided to prevent collision with the antenna board 200 when the main battery 300 is accommodated in the first accommodation space 102 may be provided on an inner circumferential surface of the first case portion 110. The main battery 300 may be restricted from moving upward by the catching portion 113. The antenna board 200 and the main battery 300 may be spaced apart by the catching portion 113. The catching portion 113 may be formed in plural. The catching portion 113 and the antenna board coupling portion 112 may be integrally formed.

The main battery 300 may be electrically connected to the main board 600. A second wire 301 electrically connecting the main battery 300 and the main board 600 may be provided. After the second wire 301 is bonded to the main battery 300, the main battery 300 may be accommodated in the first accommodation space 101.

The capacitor 400 may be disposed between the main battery 300 and the holder 500. The capacitor 400 may have a cylindrical shape or a polygonal column shape, and may be a sub-battery. The capacitor 400 may be electrically connected to the main battery 300. The capacitor 400 may be seated on the holder 500 and accommodated in the second accommodation space 102.

The holder 500 may include a base portion 510 in a disk shape, a seating portion 530 on which the capacitor 400 is seated, and a guide piece 540 supporting the main battery 300.

The base portion 510 may include a base through-hole 512 through which the fastening member 50 passes. The base through-hole 512 may be disposed at a position corresponding to the holder fastening portion 121. The base through-hole 512 may be formed in plural. For example, two or more base through-holes 512 may be disposed spaced apart from each other.

The fastening member 50 passing through the base through-hole 512 may be coupled to the holder fastening portion 121 so that the holder 500 fixes the main battery 300 upward.

The base portion 510 may include a groove 511 formed at a position corresponding to a through-hole 601 of the main board 600 to be described later. That is, the groove 511 may be formed corresponding to the number of board through-holes 601 of the main board 600. The groove 511 and the base through-hole 512 may be disposed so as not to overlap with each other.

The base portion 510 may include a second groove 512 guiding the first wire 201 and the second wire 301 so that the first wire 201 and the second wire 301 are connected to an antenna connection portion 610 and a battery connection portion 620 of the main board 600, respectively. The second groove 512 may be formed corresponding to positions of the antenna connection portion 610 and the battery connection portion 620 provided on the main board 600. The first wire 201 and the second wire 301 may be seated in the respective second grooves 512.

The seating portion 530 may be provided on an upper surface of the base portion 510. The seating portion 530 may include a first seating portion 530A, a second seating portion 530B, and a seating groove 531. The seating groove 531 may be disposed between the first seating portion 530A and the second seating portion 530B. The capacitor 400 may be disposed in the seating groove 531. The capacitor 400 may be fixed by the first seating portion 530A, the second seating portion 530B, and the seating groove 531. In detail, the first seating portion 530A and the second seating portion 530B may fix both sides of the capacitor 400 in a first direction. The seating portion 530 may further include a support step portion 520 for fixing both sides of the capacitor 400 in a second direction orthogonal to the first direction. The support step portion 520 may be formed to be lower than a height of the seating portion 530. Accordingly, the capacitor 400 may be partially exposed in the second direction.

A height of an upper end of the seating portion 530 may be lower than a height of the capacitor 400 when the capacitor 400 is disposed in the seating groove 531.

The spacers 550 for spacing the main battery 300 and the capacitor 400 apart may be disposed on upper surfaces of the first seating portion 530A and the second seating portion 530B, respectively. The spacers 550 may be formed in plural and may be disposed to correspond to each other with respect to the seating groove 531. A height of an upper end of the spacer 550 may be higher than a height of an upper end of the capacitor 400.

The guide piece 540 may be formed to extend upward from an outer circumferential surface of the seating portion 530. The guide piece 540 may be formed on outer circumferential surfaces of the first seating portion 530A and the second seating portion 530B, respectively. The guide piece 540 may be formed so as not to overlap with the seating groove 531 in a vertical direction.

An inner diameter of the guide piece 540 may be larger than an outer diameter of the main battery 300, and an outer diameter of the guide piece 540 may be smaller than an inner diameter of the first case portion 110. Accordingly, the main battery 300 may be fixed by the guide piece 540 and accommodated inside the first case portion 110.

The guide piece 540 may extend into the first accommodation space 101 to support the main battery 300. An upper end of the guide piece 540 may have elasticity with respect to a lower end thereof.

The main board 600 may be disposed closer to the other side of the case 100 or the cover 150 than the holder 500. The main board 600 may have a shape in which a part is cut from a disk shape. A position at which the connector connection portion 630 is disposed may be cut.

The main board 600 may include an antenna connection portion 610 electrically connected to the antenna board 200. The antenna connection portion 610 may be connected to the antenna board 200 through the first wire 201. The main board 600 may include a battery connection portion 620 electrically connected to the main battery 300. The battery connection portion 620 may be connected through the second wire 301.

The main board 600 may include a connector connection portion 630 connected to the connector portion 135. The connector portion 135 and the connector connection portion 630 may be electrically connected by the connector pin 135B.

The main board 600 may include board through-holes 601 through which fastening members pass to be fastened to the board fastening portions 122. The board through-holes 601 may be formed in plural. The fastening members passing through the board through-holes 601 may be coupled to the board fastening portions 122 to fix the main board 600 to the case 100. The board fastening portions 122 may be disposed lower than lower ends of the holder fastening portions 121 so that the main board 600 and the holder 500 are spaced apart from each other. That is, lower ends of the board fastening portions 122 may be closer to the other side or a lower side of the case 100 than lower ends of the holder fastening portions 121.

FIG. 8 is an enlarged view of part A of FIG. 4 showing coupling between the cover and the second accommodation space.

Referring to FIG. 8, the cover 150 may be coupled to a lower end of the second case portion 130. The second case portion 130 may include a protruding portion 131 formed along a lower circumferential edge of the second case portion 130. The protruding portion 131 may include a first protruding portion 131A disposed adjacent to the second accommodation space 102 and a second protruding portion 131B disposed adjacent to an outer circumferential surface of the second case portion 130.

The cover 150 may include a recessed portion 151 formed along an upper circumferential edge of the cover 150. The recessed portion 151 may be formed at a position corresponding to the protruding portion 131. The recessed portion 151 may include a first recessed portion 151A disposed adjacent to the second accommodation space 102 and a second recessed portion 151B disposed adjacent to an outer circumferential surface of the second case portion 130.

The first recessed portion 151A may correspond to the first protruding portion 131A, and the second recessed portion 151B may correspond to the second protruding portion 131B. The first recessed portion 151A and the first protruding portion 131A may directly contact each other, and the second recessed portion 151B and the second protruding portion 131B may directly contact each other.

A surface where the first recessed portion 151A and the first protruding portion 131A contact each other, and a surface where the second recessed portion 151B and the second protruding portion 131B contact each other may be joined. For example, the surface where the first recessed portion 151A and the first protruding portion 131A contact each other, and the surface where the second recessed portion 151B and the second protruding portion 131B contact each other may be joined through a brazing process.

A horizontal length of the second protruding portion 131B may be longer than a horizontal length of the first protruding portion 131A. Accordingly, pressure of a fluid applied from the outside may be endured.

A horizontal length of the second recessed portion 151B may be longer than a horizontal length of the first recessed portion 151A. Accordingly, pressure of a fluid applied from the outside may be endured.

Due to brazing joining of the cover 150 and the second case portion 130, waterproof performance may be excellent. Therefore, the water meter reading device according to an embodiment of the present invention may be easy to manufacture without a molding process for sealing. In addition, since there is no molding process, the water meter reading device may have a light weight and internal components may be reusable.

### [REFERENCE NUMERALS]

10: Water meter reading device
100: Case
110: First case portion
120: Connecting portion
130: Second case portion
150: Cover
170: Upper clamp
190: Lower clamp
200: Antenna board
300: Main battery
400: Capacitor
500: Holder
600: Main board

### [Industrial Applicability]

The embodiments may be applied to a water meter reading device for measuring water usage and a wireless reading device for a water meter.

## Claims

1. A water meter reading device, comprising:
a case having an accommodation space therein, wherein one side of the accommodation space is blocked and the other side is open;
a cover coupled to the other side of the case;
an antenna board disposed in the accommodation space and facing an one side of the case;
a main battery disposed in the accommodation space and facing the other side of the antenna board;
a holder disposed in the accommodation space, supporting the main battery, and coupled to the case;
a capacitor disposed between the main battery and the holder; and
a main board disposed between the holder and the cover and electrically connected to the antenna board and the main battery,
wherein the main battery is disposed closer to the one side of the case than to the other side of the case.

2. The water meter reading device according to claim 1, wherein the case comprises:
a first case portion extending in a cylindrical shape from the one side of the case toward the other side;
a connecting portion disposed between an end of the first case portion and the other side of the case and having a diameter larger than a diameter of the first case portion; and
a second case portion extending from an end of the connecting portion toward the other side of the case,
wherein the second case portion further comprises a connector portion disposed on an outer side thereof, and
wherein a diameter of the end of the connecting portion is larger than a diameter of an one end of the connecting portion.

3. The water meter reading device according to claim 2, wherein the accommodation space comprises:
a first accommodation space disposed inside the first case portion; and
a second accommodation space disposed inside the connecting portion and the second case portion,
wherein the second accommodation space becomes larger from an upper portion toward a lower portion thereof.

4. The water meter reading device according to claim 3,
wherein the antenna board and the main battery are disposed in the first accommodation space,
wherein at least one of the capacitor, the holder, and the main board is disposed in the second accommodation space,
wherein the antenna board is disposed at an uppermost portion of the first accommodation space,
wherein the capacitor is disposed between the holder and the main battery, and
wherein the main board is disposed at a lowermost portion of the second accommodation space.

5. The water meter reading device according to claim 2, wherein the connecting portion further comprises:
a holder fastening portion protruding from the connecting portion into the second accommodation space and coupled to the holder; and
a board fastening portion protruding from the connecting portion into the second accommodation space and coupled to the main board,
wherein a lower end of the board fastening portion is disposed lower than a lower end of the holder fastening portion.

6. The water meter reading device according to claim 5, wherein the main board comprises:
a board through-hole through which a fastening member passes;
an antenna connection portion disposed on one upper side of the main board and electrically connected to the antenna board;
a battery connection portion disposed on another upper side of the main board and electrically connected to the main battery; and
a connector connection portion disposed on a lower portion of the main board and electrically connected to the connector portion,
wherein the board through-hole is provided at a position corresponding to the board fastening portion.

7. The water meter reading device according to claim 2, wherein the holder comprises:
a base portion formed in a plate shape;
a seating portion extending from one side surface of the base portion toward the one side surface of the case and on which the capacitor is seated;
a guide piece extending further from the seating portion toward the one side surface of the case and supporting a lower circumference of the main battery; and
a spacer disposed on one side surface of the seating portion, contacting a lower portion of the main battery and spacing a lower surface of the main battery apart from a surface of the capacitor,
wherein the base portion further comprises a base through-hole provided at a position corresponding to the holder fastening portion.

8. The water meter reading device according to claim 2, wherein the second case portion comprises:
a protruding portion disposed around a lower circumference of the second case portion and disposed from an inner surface toward an outer surface of the second case portion,
wherein the protruding portion comprises:
a first protruding portion adjacent to an inner surface of the second case portion; and a second protruding portion adjacent to an outer surface of the second case portion,
wherein a horizontal length of the second protruding portion is thicker than a horizontal length of the first protruding portion.

9. The water meter reading device according to claim 8, wherein the cover is provided in a disk shape, and
wherein the cover comprises a recessed portion disposed around an outer circumferential edge in a radial direction of the cover and disposed from an inner surface toward an outer surface,
wherein the recessed portion comprises:
a first recessed portion disposed corresponding to the first protruding portion; and a second recessed portion disposed corresponding to the second protruding portion,
wherein a horizontal length of the second recessed portion is thicker than a horizontal length of the first recessed portion.

10. The water meter reading device according to claim 9,
wherein a bottom surface of the first recessed portion and a surface of the cover contacting the bottom surface of the first recessed portion are joined, and
wherein a bottom surface of the second recessed portion and a surface of the cover contacting the bottom surface of the second recessed portion are joined.
